(19) Europäisches Patentamt

European Patent Office

Office européen des brevets

(11) **EP 1 696 294 A2**

(12) **EUROPEAN PATENT APPLICATION**

(43) Date of publication:
**30.08.2006 Bulletin 2006/35**

(51) Int Cl.:
***G05B 19/425*** (2006.01)    ***B25J 9/16*** (2006.01)

(21) Application number: **06003594.6**

(22) Date of filing: **22.02.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **25.02.2005 JP 2005050210**

(71) Applicant: **SEIKO EPSON CORPORATION
Shinjuku-ku,
Tokyo 163-0811 (JP)**

(72) Inventor: **Igarashi, Katsuji
Nagano-ken 392-8502 (JP)**

(74) Representative: **HOFFMANN EITLE
Patent- und Rechtsanwälte
Arabellastrasse 4
81925 München (DE)**

(54) **Method and apparatus for generating teaching data for a robot**

(57)    A robot locus control method includes the steps of calculating the position and attitude of an end tool (101) of a robot (100) on the basis of a local-coordinate system set based on a fixing point out of the robot (100), and transforming the position and attitude of the end tool (101) on the basis of the local-coordinate system, into the position and attitude of the end tool (101) on the basis of a robot-base coordinate system set on the robot, based on a relationship between the local-coordinate system and the robot-base coordinate system.

FIG. 1

**Description**

**BACKGROUND OF THE INVENTION**

1. Field of the Invention

The present invention relates to robot locus control method and apparatus to control the position and attitude of the robot, thereby moving and processing a processing target, in which a processing tool is fixed around a robot (manipulator) and the robot is allowed to grip (sandwich) the processing target.

2. Description of the Related Art

Hitherto, various types of robots are used to process a subject. Further, various robot processing methods exist. For example, such a method is proposed to allow an end effector (hereinafter, referred to as an end tool) attached to the end of a robot to grip a processing target (hereinafter, referred to as a work) and the robot moves the work relatively to a tool (hereinafter, referred to as an external fixed tool) fixed out of the robot to process the work (e.g., refer to Japanese Unexamined Patent Application Publication No. 2-82302 (Patent Document 1)). Before actually processing the work using the robot, the start position and the end position of the processing operation are generally taught to a robot control device (teaching), and coordinate data is generated in order to control the locus of the robot (work) at the processing time.
Conventionally, when generating the coordinate data based on the teaching, a coordinate system as a reference is used, e.g., a robot-base coordinate system having an origin and an XY plane on a base on which the robot is set. The data obtained by the teaching has a close relationship with the robot-base coordinate system and, therefore, is designed as data peculiar to the robot set on that position. Thus, upon causing the setting deviation due to maintenance or the change of the robot body, the teaching needs to be re-performed and a large amount of data needs to be generated again. That is, there is a problem that the recovery after the maintenance or the like takes a long time.

**SUMMARY**

An advantage of some aspects of the present invention is to realize robot locus control method and apparatus, in which the operation efficiency is improved by reducing, as much as possible, time for generating data by the teaching operation for the second time.
A robot locus control method according to an aspect of the present invention comprises the steps of: calculating a positional relationship between the position of an end effector and an external control point set based on a fixed tool which processes a processing target and further calculating the attitude of the end effector, on the basis of a local-coordinate system set based on a fixing point out of a robot for allowing the end effector to grip and move the processing target; and transforming the position and attitude of the end effector on the basis of the local-coordinate system into the position and attitude of the end effector on the basis of the robot-base coordinate system set on the robot, based on a relationship between the robot-base coordinate system and the local-coordinate system.
According to the above aspect of the present invention, the local-coordinate system is set to the fixing point out of the robot for allowing the end effector to grip and move the processing target so as to prevent the direct dependence on the robot-base coordinate system, of the data on the position and attitude of the end effector, such as the positional relationship between the end effector and the external control point, relating to the robot operation. Further, the transformation into the robot-base coordinate system is obtained by calculation. Therefore, e.g., even when the maintenance causes the positional deviation of the robot, only the relationship between the robot-base coordinate system and the local-coordinate system is corrected. Thus, the operation efficiency is improved by suppressing the troublesomeness of re-teaching and reducing, as much as possible, the time for generating data. In particular, when the end effector of the robot is allowed to grip and move the processing target, the amount of teaching operation is large and the robot needs to execute complicated operation in the processing in many cases. Consequently, the time is effectively reduced.
A robot locus control method according to another aspect of the present invention comprises the steps of: generating teaching data by setting the position and the axis direction of an end-tool coordinate system set on an end effector of a robot at operation start and operation end, obtained by teaching operation of the robot, as the position and attitude of the end effector on the basis of a local-coordinate system set based on a fixing point out of the robot,; generating data on the position of an external control point out of the robot on the basis of the end-tool coordinate system at the operation start and the operation end, based on the teaching data; interpolating and generating data on the position of the external control point on the basis of the end-tool coordinate system from the operation start to the operation end, based on the data on the position of the external control point on the basis of the end-tool coordinate system at the operation start and the operation end, and further generating data on the attitude of the end effector an the interpolated position on the basis of the local-coordinate system; and calculating the position of the external control point on the basis of the local-coordinate system, based on the data on the position and attitude of the end effector, and further generating data on the position and attitude of the end effector on the basis of the robot-base coordinate system set on the robot from a relationship between a robot-base coordinate system and the local-coordinate system.

According to the above aspect of the present invention, the teaching data is generated by setting, as the position and attitude of the end effector on the basis of the local-coordinate system, the position and the axis direction of the end-tool coordinate system at the operation start and the operation end, obtained by the teaching operation. The position of the external control point is calculated and interpolated on the basis of the end-tool coordinate system based on the teaching data. The position and attitude of the end effector are calculated on the basis of the local-coordinate system and are further calculated based on the relationship between the local-coordinate system and the robot-base coordinate system. By expressing the position and attitude of the end effector on the basis of the robot-base coordinate system, the data on the position and attitude of the end effector can prevent the direct dependence thereof on the robot-base coordinate system. Therefore, for example, even when the maintenance causes the positional deviation of the robot, only the relationship between the robot-base coordinate system and the local-coordinate system is corrected. The troublesomeness of re-teaching operation is suppressed and the recovery operation, such as time reduction, is efficient.

A robot locus control apparatus according to an aspect of the present invention comprises: locus control data generating means for calculating a positional relationship between the position of an end effector and an external control point set based on a fixed tool which processes a processing target, further calculating the attitude of the end effector, on the basis of a local-coordinate system set based on a fixing point out of a robot for allowing the end effector to grip and move the processing target, and transforming the position and attitude of the end effector on the basis of the local-coordinate system into the position and attitude of the end effector on the basis of a robot-base coordinate system set on robot, based on a relationship between a robot-base coordinate system set on the robot and the local-coordinate system.

According to the above aspect of the present invention, the local-coordinate system is set to the fixing point out of the robot for allowing the end effector to grip and move the processing target. The data on the position and attitude of the end effector, such as the positional relationship between the end effector and the external control point, relating to the robot operation, prevents the direct dependence thereof on the robot-base coordinate system. The locus control data generating means calculates the transformation into the robot-base coordinate system. Therefore, for example, even when the maintenance causes the positional deviation of the robot, only the relationship between the robot-base coordinate system and the local-coordinate system is corrected. Thus, the troublesomeness of re-teaching is suppressed and the recovery, such as time reduction, is efficient. In particular, upon allowing the end effector of the robot to grip and move the processing target, the amount of teaching operation is large and the robot needs to perform the complicated operation in the processing. Consequently, the time reduction is efficient.

A robot locus control apparatus according to another aspect of the present invention comprises: teaching-signal processing means for generating teaching data by setting the position and the axis direction of an end-tool coordinate system set on the end effector of a robot at operation start and operation end, obtained by teaching operation of the robot, as the position and attitude of the end effector on the basis of a local-coordinate system set based on a fixing point out of the robot,; position/attitude setting means for generating data on the position of an external control point out of the robot on the end-tool coordinate system at the operation start and the operation end, based on the teaching data; interpolating means for interpolating and generating data on the position of the external control point on the basis of the end-tool coordinate system from the operation start to the operation end, based on the data on the position of the external control point on the basis of the end-tool coordinate system at the operation start and the operation end, and further generating data on the attitude of the end effector at an interpolated position on the basis of the local-coordinate system; and locus control data generating means for calculating the position of the external control point on the basis of the local-coordinate system, based on the data on the position and attitude of the end effector, and further generating data on the position and attitude of the end effector on the basis of the robot-base coordinate system set on the robot from a relationship between the robot-base coordinate system and the local-coordinate system.

According to the above aspect of the present invention, the teaching-signal processing means generates the teaching data by setting, as the position and attitude of the end effector on the basis of a local-coordinate system set based on the fixing point out of the robot, the position and the axis direction of an end-tool coordinate system set on the end effector of the robot at operation start and operation end, obtained by teaching operation. The position/attitude setting means calculates the position of the external control point on the basis of the end-tool coordinate system based on the teaching data. The interpolating means interpolates the data. The locus control data generating means expresses the position and attitude of the end effector on the basis of the local-coordinate system and further expresses it on the basis of the robot-base coordinate system, based on the relationship between the local-coordinate system and the robot-base coordinate system. Therefore, the data of the position and attitude of the end effector prevents the direct dependence on the robot-base coordinate system. Therefore, for example, even when the maintenance causes the positional deviation of the robot, only the relationship between the robot-base coordinate system and the local-coordinate system is corrected. Thus, the troublesomeness of re-teaching is suppressed. Consequently, the recovery operation, such as time reduction, is efficient.

A program of a robot locus control method according to an aspect of the present invention for enables a computer to execute the steps of: calculating a positional relationship between the position of an end effector and an external control point set based on a fixed tool which processes a processing target and further calculating the attitude of the end effector, on the basis of a local-coordinate system set based on a fixing point out of a robot for allowing the end effector to grip and move the processing target; and transforming the position and attitude of the end effector on the basis of the local-coordinate system into the position and attitude of the end effector on the basis of the robot-base coordinate system set on the robot, based on a relationship between the robot-base coordinate system and the local-coordinate system.

According to the above aspect of the present invention, the local-coordinate system is set to the fixing point out of the robot for allowing the end effector to grip and move the processing target. The data on the position and attitude of the end effector, such as the positional relationship between the end effector and the external control point, relating to the robot operation, prevents the direct dependence thereof on the robot-base coordinate system. The computer calculates the transformation into the robot-base coordinate system. Therefore, even when the maintenance causes the positional deviation of the robot, the troublesomeness of re-teaching is suppressed. Consequently, the recovery operation, such as time reduction, is efficient. In particular, upon allowing the end effector of the robot to grip and move the processing target, the amount of teaching operation is large and the robot needs to perform the complicated operation in the processing. Consequently, the time reduction is efficient.

A program of a robot locus control method according to another aspect of the present invention enables a computer to execute the steps: generating teaching data by setting the position and the axis direction of an end-tool coordinate system set on an end effector of a robot at operation start and operation end, obtained by teaching operation of the robot, as the position and attitude of the end effector on the basis of a local-coordinate system set based on a fixing point out of the robot; generating data on the position of an external control point out of the robot on the basis of the end-tool coordinate system at the operation start and the operation end, based on the teaching data; interpolating and generating data on the position of the external control point on the basis of the end-tool coordinate system from the operation start to the operation end, based on the data on the position of the external control point on the basis of the end-tool coordinate system at the operation start and the operation end, and further generating data on the attitude of the end effector at an interpolated position on the basis of the local-coordinate system; and calculating the position of the external control point on the basis of the local-coordinate system, based on the data on the position and attitude of the end effector, and further generating data on the position and attitude of the end effector on the basis of the robot-base coordinate system set on the robot from a relationship between a robot-base coordinate system and the local-coordinate system.

According to the above aspect of the present invention, the teaching data is generated by setting, as the position and attitude of an end effector on the basis of a local-coordinate system set based on a fixing point out of the robot, the position and the axis direction on an end-tool coordinate system set on the end effector of the robot at operation start and operation end, obtained by teaching operation. The position of the external control point is calculated and interpolated on the basis of the end-tool coordinate system based on the teaching data. The position and attitude of the end effector are calculated on the basis of the local-coordinate system and are further calculated based on the relationship between the local-coordinate system and the robot-base coordinate system. By expressing the position and attitude of the end effector on the robot-base coordinate system, the data on the position and attitude of the end effector can prevent the direct dependence thereof on the robot-base coordinate system. Therefore, for example, when the maintenance causes the positional deviation of the robot, only the relationship between the robot-base coordinate system and the local-coordinate system is corrected. The troublesomeness of re-teaching operation is suppressed and the recovery operation, such as time reduction, is efficient.

## BRIEF DESCRIPTION OF THE DRAWINGS

Fig. 1 is a diagram mainly showing the structure of a robot locus control apparatus according to a first embodiment;
Fig. 2 is a diagram showing a relationship between the robot 100 and coordinate systems; and
Figs. 3A to 3C are diagrams conceptually showing matrixes according to embodiments.

## DESCRIPTION OF THE PREFERRED EMBODIMENTS

## First embodiment

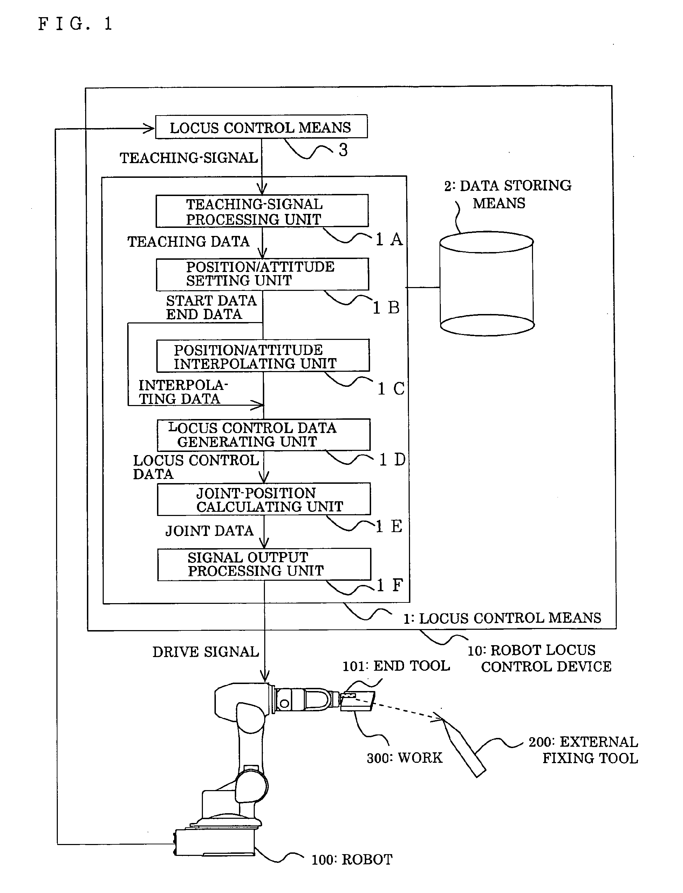

Fig. 1 is a diagram showing a system mainly including a robot locus control apparatus according to a first embodiment of the present invention. A robot locus control apparatus 10 according to the first embodiment comprises: locus control means 1; data storing means 2; and input setting means 3. The robot locus control apparatus 10 outputs a drive signal, and controls the position and attitude of joints (pivots) of a robot 100. Thus, the position and attitude of a work 300 gripped by an end tool 101 of the robot 100 are controlled. According to the first embodiment, e.g., one side (line segment) of the rectangular work 300 is processed. Therefore, the position and attitude of the robot 100 is controlled so that the processing point of an external fixed tool 200 has a locus which relatively moves straight from the start position to the end position of the processing operation on the work 300. Here, the end of the external fixed tool 200 is the processing point, and the processing point becomes an external control point set in calculation which will be described later.

The locus control means 1 further comprises: a teaching-signal processing unit 1A; a position/attitude setting unit 1B; a position/attitude interpolating unit 1C; a locus control data generating unit 1D; a joint-position calculating unit 1E; and a signal output processing unit 1F. The teaching-signal processing unit 1A generates data (hereinafter, referred to as teaching data) based on a teaching signal sent from the input setting means 3 by teaching operation (setting of a teaching point, etc.) of the robot 100. The position/attitude setting unit 1B sets the position and attitude of the end tool 101 based on the teaching data. According to the first embodiment, the position of an external control point is calculated on the end-tool coordinate system set to the end tool 101 at the start and the end of operation, thereby setting start data and end data. The position/attitude interpolating unit 1C performs the interpolation based on the start data and the end data obtained by the calculation of the position/attitude setting unit 1B, thereby generating interpolating data indicating the position and attitude of the end tool 101 at interpolating points. The locus control data generating unit 1D generates locus control data based on the start data, end data, and interpolating data. Further, the joint-position calculating unit 1E calculates the position (position of a joint angle) of the joint (pivot) of the robot 100 based on the calculated locus control data, as data (hereinafter, referred to as joint data). The signal output processing unit 1F outputs a driving signal including the joint data to the robot 100, thereby driving the robot 100.

Here, according to the first embodiment, a control processing device, mainly including a CPU, realizes the locus control means 1, and the control processing device executes the processing of the units. In this case, e.g., the procedure of the processing of each unit is stored in the data storing means 2.

The data storing means 2 stores data necessary for processing of the locus control means 1. As will be described later, in particular, the data storing means 2 stores data defined on a robot-base reference coordinate system, a first local-coordinate system, a second local-coordinate system, an end-tool coordinate system, and an external-control-point coordinate system, necessary for generating the locus control data based on the teaching data, which are defined by the position/attitude setting unit 1B, the position/attitude interpolating unit 1C, and the locus control data generating unit 1D. Further, the data storing means 2 stores data on an external control point (external fixing tool 200). The input setting means 3 generates the teaching signal generated by the teaching of the robot 100. For example, data, such as number, may be inputted by using data input means, e.g., a keyboard, as the input setting means 3, to generate the teaching signal.

The robot 100 has various types, e.g., 6-pivot vertical multi-joint robot and scholar robot. However, the robot is not limited according to the present invention. The type and application of the external fixed tool 200 may be, e.g., a welding tool, and are not limited. The work 300 is similar to the foregoing.

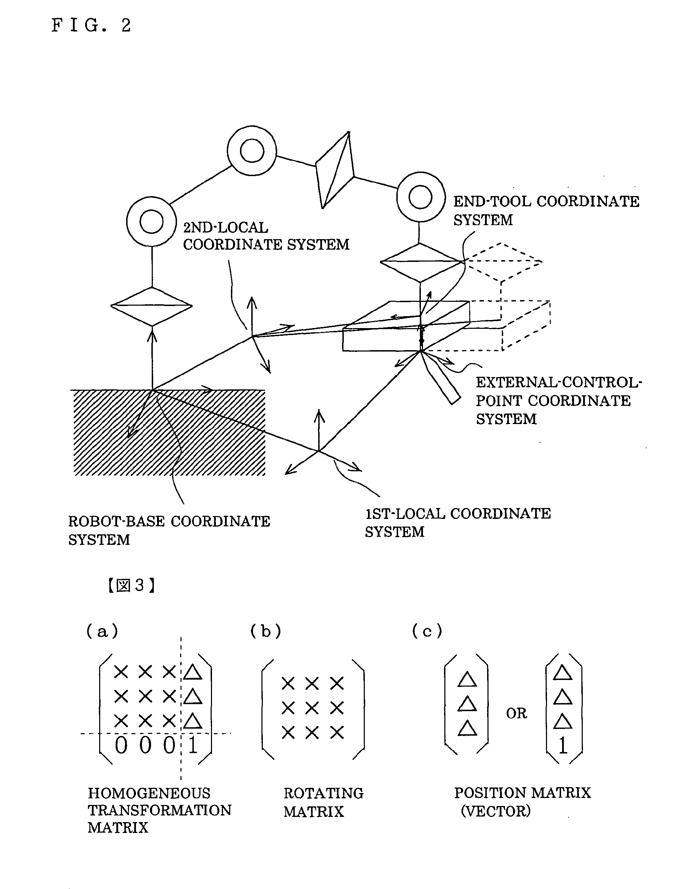

Fig. 2 is a diagram showing a relationship between the robot 100 and coordinate systems. Prior to the description of the processing of the locus control means 1 according to the first embodiment, a description is first given of the definition (setting) of the coordinate systems stored in the data storing means 2. Regarding the robot-base coordinate system, one position (e.g., central point) of the base on which the robot 100 is set is defined as a reference point (origin), e.g., the base is defined as the XY plane.

Next, the local-coordinate system is defined. According to the first embodiment, the end tool and the external control point are defined on individual local-coordinate systems. However, the end tool and the external control point may be defined on a single local-coordinate-system. Each local-coordinate system is an arbitrary coordinate system having a fixing point out of a robot, as the origin, which is defined by moving the robot-base coordinate system in parallel and/or rotating it. By defining the local-coordinate system to the fixing point, with respect to data on the coordinate or the like concerning the operation of the robot 100, such as the positional relationship between the end tool and the external control point and the positions and attitudes of the end tool and the external control point, data based on the local-coordinate system is generated, thereby preventing the dependence on the robot-base coordinate system changed depending on the type and setting condition of the robot 100. The positional relationship relating to the operation is determined. For example, even when the setting deviation of the robot 100 exists after maintenance, only a relationship between the local-coordinate system and robot-base coordinate system (as will be described later, homogeneous transformation matrix, etc.) may be corrected. Thus, the time is reduced and the recovery is efficient.

Figs. 3A to 3C are diagrams conceptually showing the matrixes according to the embodiments. The first local-coordinate system is used to set, as data, the position (origin on the external-control-point coordinate system) and the attitude (relating to the axis direction on the external-control-point coordinate system) of the external control point set based on the external fixed tool 200 (the external fixed tool 200 is fixed according to the first embodiment and, therefore, the origin and axis direction on the external-control-point coordinate system are fixed). For example, a coordinate system defined for a device positioned around the setting position of the external fixed tool 200 may be the first local-coordinate system. Referring to Fig. 3A, upon defining the first local-coordinate system based on the robot-base coordinate system according to the embodiment, the homogeneous transformation matrix is expressed by symbol $^0T_{L1}$ ($4\times4$ matrix). Referring to Fig. 3B, a matrix (here, rotating matrix) of the rotating element included in the homogeneous transformation matrix is expressed by symbol $^0R_{L1}$ ($3\times3$ matrix). Then, the position of the external control point on the first local-coordinate system is designated by symbol $^{L1}P_E$ according to the first embodiment. Referring to Fig. 3C, a matrix (vector) indicating the position in addition to $^{L1}P_E$ according to the embodiments is $3\times1$ matrix in the case of calculation with a matrix of rotating element. In the case of calculation with the homogeneous transformation matrix, "1" is added to the fourth row, thereby obtaining $4\times1$ matrix. In the case of calculation of the homogeneous transformation matrix and the rotating matrix, the adjustment is similarly necessary.

On the other hand, a second local-coordinate system is used to set the position and attitude of the end tool 101. For example, a coordinate system defined to a tray, on which works are to be piled, is set, as the second local-coordinate system. Similarly to the first local-coordinate system, upon defining the second local-coordinate system based on the robot-base coordinate system, the homogeneous transformation matrix is expressed by symbol $^0T_{L2}$ ($4\times4$ matrix) according to the first embodiment. The matrix of the rotating element included in the homogeneous transformation matrix is expressed by symbol $^0R_{L2}$ ($3\times3$ matrix). An end-tool coordinate system is a coordinate system for defining, as the origin, one position (e.g., central position) of the end tool 101 of the robot 100. Here, the origin of the end-tool coordinate system is the position of the end tool 101, and each axis direction correlates to the attitude of the end tool 101.

Next, a description is mainly given of processing of the locus control means 1, in particular, processing of the position/attitude setting unit 1B, the position/attitude interpolating unit 1C, and the locus control data generating unit 1D according to the first embodiment. First, the teaching-signal processing unit 1A performs processing for defining the position and attitude at the start time and the end time for processing on the second-local coordinate system based on the teaching signal sent by the teaching to the robot 100. In this case, the matrixes indicating the start position and the attitude are designated by symbols $^{L2}P_S$ and $^{L2}R_{TS}$. Matrixes (vectors) indicating the end position and the attitude are designated by symbols $^{L2}P_D$ and $^{L2}R_{TD}$.

The position/attitude setting unit 1B calculates the position of the external control point on the end-tool coordinate system at the start time and the end time of processing. The position of the external control point on the end-tool coordinate system at the start time is designated by symbol $^{T(TS)}P_E$. Then, symbol $^{T(TS)}P_E$ is expressed by the following Expressions (1) and (2). Here, the pivot direction of the end-tool coordinate system depends on the attitude of the end tool 101 at the start time for processing. Symbol $^0P_{SE}$ denotes a vector directed from the start position of processing to the external control point on the robot-base coordinate system. Further, e.g., symbol $(^0R_{L2})^{-1}$ denotes an inverse matrix of symbol $^0R_{L2}$.

$$^0P_{SE} = {}^0T_{L1}{}^{L1}P_E - {}^0T_{L2}{}^{L2}P_S \qquad \dots (1)$$

$$^{T(TS)}P_E = ({}^{L2}R_{TS})^{-1}({}^0R_{L2})^{-1}{}^0P_{SE} \qquad \dots (2)$$

Similarly, the position of the external control point on the end-tool coordinate system at the end time of processing is designated by $^{T(TD)}P_E$. The following Expressions (3) and (4) express $^{T(TD)}P_E$. Here, the pivot direction of the end-tool coordinate system depends on the attitude of the end tool 101 at the end time for processing. Symbol $^0P_{DE}$ denotes a vector directed from the end position for processing to the external control point on the robot-base coordinate system.

$$^0P_{DE} = {}^0T_{L1}{}^{L1}P_E - {}^0T_{L2}{}^{L2}P_D \qquad \dots (3)$$

$$^{T(TD)}P_E = ({}^{L2}R_{TD})^{-1}({}^0R_{L2})^{-1}{}^0P_{DE} \qquad \dots (4)$$

The position/attitude interpolating unit 1C generates interpolating data by sequential calculation based on the position of the external control point on the end-tool coordinate system at the start time and the end time of processing calculated by the position/attitude setting unit 1B. A calculating method (algorithm) for generating the interpolating data is not limited. Here, the position of the external control point on the end-tool coordinate system in certain calculated interpolating data is designated by symbol $^{T(TC)}P_E$. The attitude of the external control point on the second local-coordinate system is designated by symbol $^{L2}R_{TC}$. In this case, the position (origin of the end-tool coordinate system) of the end tool 101 on the robot-base coordinate system is designated by $^0P_{TC}$. The attitude (pivot direction of the end-tool coordinate system) of the end tool 101 is designated by symbols $^0R_{TC}$ and, then, symbols $^0P_{TC}$ and $^0R_{TC}$, serving as the locus control data, are expressed by the following Expressions (5) and (6). The locus control data generating unit 1D generates the locus control data based on the following Expression (5) and Expression (6). If the position (vector) is finally correct, the method for obtaining the position is not limited to Expression (5). In Expression (5), the position $^0P_{TC}$ is calculated on the robot-base coordinate system. Expression (5) includes calculation for transforming the reference coordinate system from the end-tool coordinate system to the local-coordinate system and calculation for transforming the reference coordinate system from the local-coordinate system to the robot-base coordinate system.

$$^0P_{TC} = {}^0T_{L1}\left({}^{L1}P_E - \left({}^0R_{L1}\right)^{-1}{}^0R_{L2}{}^{L2}R_{TC}{}^{T(TC)}P_E\right) \quad \dots \quad (5)$$

$$^0R_{TC} = {}^0R_{L2}{}^{L2}R_{TC} \quad \dots \quad (6)$$

The joint-position calculating unit 1E performs the calculation of inverse kinematics based on the locus control data, thereby calculating, as joint data, the position (joint angle position) of each joint (pivot) in the robot 100 for setting the end tool 101 (work 300) to desired position and attitude. This is expressed by the following Expression (7). In the calculation of inverse kinematics, the joint deviation (rotation and translatory operation) is calculated from the position and attitude of the end tool 101. Since the method for generating the joint data based on the calculation of inverse kinematics has expressions varied depending on the type of the robot 100, such as the number of pivots, here, it is not described in detail.

$$\theta = f^{-1}\left({}^0P_{TC}, {}^0R_{TC}\right) \quad \dots \quad (7)$$

The signal output processing unit 1F outputs a drive signal for driving the robot 100 in accordance with joint data. The robot 100 rotates and drives the joint based on the drive signal.

As mentioned above, according to the first embodiment, the first and second local-coordinate systems are set to the fixing point out of the robot 100, and the position and attitude of the end tool 101 for gripping the work 300 and the position of the external control point (external fixed tool 200 for processing the work 300) are set on the first and second local-coordinate systems. The teaching-signal processing unit 1A, the position/attitude setting unit 1B, the position/attitude interpolating unit 1C and the locus control data generating unit 1D perform the processing based on the teaching signal, thereby generating the locus control data indicating the position and attitude of the end tool 101 on the robot-base coordinate system. This prevents the direct dependence, on the robot-base coordinate system, of the position and attitude of the end tool 101, the position of the external control point, and the positional relationships thereamong relating to the operation of the robot 100. Therefore, even when the maintenance causes the positional deviation of the robot, the relationship between the end tool 101 and the external control point with respect to the operation of the robot 100 does not change. Therefore, at the recovery operation, only by changing the positional relationship (homogeneous transformation matrix) between the robot-base coordinate system and the local-coordinate system, it is possible to lead to the position and attitude of the end tool 101 on the robot-base coordinate system. Since the positional relationship relating to the operation can be applied to another robot, it is not necessarily defined peculiarly to the robot, and can be generally used. Thus, the teaching operation is efficient. This is particularly effective when the robot 100 moves the work 300 to the external fixed tool 200 and processes it with a large amount of teaching for complicated operation.

## Second embodiment

According to the first embodiment, as the local-coordinates system, the first and second local-coordinate systems are set. However, the present invention is not limited to this and the single local-coordinate-system may be set. In this case, in the Expressions (1) to (4), positions $^{T(TS)}P_E$ and $^{T(TD)}P_E$ can be calculated on the local-coordinate system without using the homogeneous transformation matrix on the robot-base coordinate system.

Further, according to the first embodiment, the relationship between the end tool 101 and the robot-base coordinate system and between the external control point and the robot-base coordinate system are expressed with intervention of the first and second local-coordinate systems. However, the present invention is not limited to this. The position and attitude of the end tool 101 and the external control point on the robot-base coordinate system may be expressed by multi-transformation of local-coordinate system.

### Third embodiment

According to the first and second embodiments, since the robot 100 performs the drive operation for drawing the locus for linear processing. However, the present invention is not limited to this. For example, the increase in teaching points enables the control operation for drawing the complicated locus along the locus, such as circular locus and locus of free curve. In particular, according to the present invention, as the number of teaching points is larger, the advantage for reducing the time of recovery is largely exhibited.

According to the first and second embodiments, the external fixed tool 200 is fixed, the external control point does not move or rotate. However, even when the external control point moves or rotates, the present invention can be applied.

### Claims

1. A robot locus control method comprising the steps of:

   calculating a positional relationship between the position of an end effector (101) and an external control point set based on a fixed tool (200) which processes a processing target (300) and further calculating the attitude of the end effector (101), on the basis of a local-coordinate system set based on a fixing point out of a robot (100) for allowing the end effector (101) to grip and move the processing target (300); and
   transforming the position and attitude of the end effector (101) on the basis of the local-coordinate system into the position and attitude of the end effector (101) on the basis of a robot-base coordinate system set on the robot (100), based on a relationship between the robot-base coordinate system and the local-coordinate system.

2. A robot locus control method comprising the steps of:

   generating teaching data by setting the position and the axis direction of an end-tool coordinate system set on the basis of the end effector (101) of a robot (100) at operation start and operation end, obtained by teaching operation of the robot (100), as the position and attitude of the end effector (101) on the basis of a local-coordinate system set based on a fixing point out of the robot (100);
   generating data on the position of an external control point out of the robot (100) on the basis of the end-tool coordinate system at the operation start and the operation end, based on the teaching data;
   interpolating and generating data on the position of the external control point on the basis of the end-tool coordinate system from the operation start to the operation end, based on the data on the position of the external control point on the basis of the end-tool coordinate system at the operation start and the operation end, and further generating data on the attitude of the end effector (101) at an interpolated position on the basis of the local-coordinate system; and
   calculating the position of the external control point on the basis of the local-coordinate system, based on the data on the position and attitude of the end effector (101), and further generating data on the position and attitude of the end effector (101) on the basis of a robot-base coordinate system set on the robot (100) from a relationship between a robot-base coordinate system and the local-coordinate system.

3. A robot locus control apparatus comprising:

   locus control data generating means (ID) for calculating a positional relationship between the position of an end effector (101) and an external control point set based on a fixed tool (200) which processes a processing target (300), further calculating the attitude of the end effector (101), on the basis of a local-coordinate system set based on a fixing point out of a robot (100) for allowing the end effector (101) to grip and move the processing target (300); and transforming the position and attitude of the end effector (101) on the basis of the local-coordinate system into the position and attitude of the end effector (101) on the basis of a robot-base coordinate system set on the robot, based on a relationship between the robot-base coordinate system and the local-coordinate system.

**4.** A robot locus control apparatus comprising:

teaching-signal processing means (1A) for generating teaching data by setting the position and the axis direction of an end-tool coordinate system set on an end effector (101) of a robot (100) at operation start and operation end, obtained by teaching operation of the robot (100), as the position and attitude of the end effector (101) on the basis of a local-coordinate system set based on a fixing point out of the robot (100);

position/attitude setting means (1B) for generating data on the position of an external control point out of the robot (100) on the basis of the end-tool coordinate system at the operation start and the operation end, based on the teaching data;

interpolating means (1C) for interpolating and generating data on the position of the external control point on the basis of the end-tool coordinate system from the operation start to the operation end, based on the data on the position of the external control point on the basis of the end-tool coordinate system at the operation start and the operation end, and further generating data on the attitude of the end effector (101) at an interpolated position on the basis of the local-coordinate system; and

locus control data generating means (1D) for calculating the position of the external control point on the basis of the local-coordinate system, based on the data on the position and attitude of the end effector (101), and further generating data on the position and attitude of the end effector (101) on the basis of a robot-base coordinate system set on the robot (100) from a relationship between the robot-base coordinate system and the local-coordinate system.

**5.** A program of robot locus control method for enabling a computer to execute the steps of:

calculating a positional relationship between the position of an end effector and an external control point set based on a fixed tool which processes a processing target and further calculating the attitude of the end effector, on the basis of a local-coordinate system set based on a fixing point out of a robot for allowing the end effector to grip and move the processing target; and

transforming the position and attitude of the end effector on the basis of the local-coordinate system into the position and attitude of the end effector on the basis of a robot-base coordinate system set on the robot, based on a relationship between the robot-base coordinate system and the local-coordinate system.

**6.** A program of a robot locus control method for enabling a computer to execute the steps of:

generating teaching data by setting the position and the axis direction of an end-tool coordinate system set on an end effector of a robot at operation start and operation end, obtained by teaching operation of the robot, as the position and attitude of the end effector on the basis of a local-coordinate system set based on a fixing point out of the robot;

generating data on the position of an external control point out of the robot on the basis of the end-tool coordinate system at the operation start and the operation end, based on the teaching data;

interpolating and generating data on the position of the external control point on the basis of the end-tool coordinate system from the operation start to the operation end, based on the data on the position of the external control point on the basis of the end-tool coordinate system at the operation start and the operation end, and further generating data on the attitude of the end effector at an interpolated position on the basis of the local-coordinate system; and

calculating the position of the external control point on the basis of the local-coordinate system, based on the data on the position and attitude of the end effector, and further generating data on the position and attitude of the end effector on the basis of a robot-base coordinate system set on the robot from a relationship between the robot-base coordinate system and the local-coordinate system.

EP 1 696 294 A2

F I G. 1

LOCUS CONTROL MEANS

~3

TEACHING-SIGNAL

2: DATA STORING
MEANS

TEACHING-SIGNAL
PROCESSING UNIT

~1 A

TEACHING DATA

POSITION/ATTITUDE
SETTING UNIT

~1 B

START DATA
END DATA

POSITION/ATTITUDE
INTERPOLATING UNIT

~1 C

INTERPOLA-
TING DATA

LOCUS CONTROL DATA
GENERATING UNIT

~1 D

LOCUS CONTROL
DATA

JOINT-POSITION
CALCULATING UNIT

~1 E

JOINT DATA

SIGNAL OUTPUT
PROCESSING UNIT

~1 F

1: LOCUS CONTROL MEANS

DRIVE SIGNAL

10: ROBOT LOCUS
CONTROL DEVICE

101: END TOOL

300: WORK

200: EXTERNAL
FIXING TOOL

100: ROBOT

10

F I G. 2

END-TOOL COORDINATE
SYSTEM

2ND-LOCAL
COORDINATE SYSTEM

EXTERNAL-CONTROL-
POINT COORDINATE
SYSTEM

ROBOT-BASE COORDINATE
SYSTEM

1ST-LOCAL COORDINATE
SYSTEM

【図3】

(a)

$$\begin{pmatrix} \times & \times & \times & \triangle \\ \times & \times & \times & \triangle \\ \times & \times & \times & \triangle \\ 0 & 0 & 0 & 1 \end{pmatrix}$$

HOMOGENEOUS
TRANSFORMATION
MATRIX

(b)

$$\begin{pmatrix} \times & \times & \times \\ \times & \times & \times \\ \times & \times & \times \end{pmatrix}$$

ROTATING
MATRIX

(c)

$$\begin{pmatrix} \triangle \\ \triangle \\ \triangle \end{pmatrix} \quad OR \quad \begin{pmatrix} \triangle \\ \triangle \\ \triangle \\ 1 \end{pmatrix}$$

POSITION MATRIX
(VECTOR)